(19) Europäisches Patentamt
European Patent Office
Office européen des brevets

(11) **EP 0 963 561 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **98916805.9**

(22) Anmeldetag: **26.02.1998**

(51) Int Cl.:
***G01S 7/40*** *(2006.01)*

(86) Internationale Anmeldenummer:
**PCT/DE1998/000571**

(87) Internationale Veröffentlichungsnummer:
**WO 1998/038525 (03.09.1998 Gazette 1998/35)**

(54) **SENSORSYSTEM**

SENSOR SYSTEM

SYSTEME DETECTEUR

(84) Benannte Vertragsstaaten:
**DE FR GB NL SE**

(30) Priorität: **28.02.1997 DE 19708238**

(43) Veröffentlichungstag der Anmeldung:
**15.12.1999 Patentblatt 1999/50**

(73) Patentinhaber: **SIEMENS AKTIENGESELLSCHAFT**
**80333 München (DE)**

(72) Erfinder:
• **KREPPOLD, Bernhard**
**D-81549 München (DE)**
• **VOSSIEK, Martin**
**D-80789 München (DE)**
• **HEIDE, Patric**
**D-85579 Neubiberg (DE)**

(56) Entgegenhaltungen:
**EP-A- 0 466 258**     **US-A- 4 593 287**
**US-A- 5 172 123**

**EP 0 963 561 B1**

**Beschreibung**

Die vorliegende Erfindung betrifft ein Sensorsystem gemäß Anspruch 1.

EP 0 466 258 A2 offenbart ein Sensorsystem gemäß dem Oberbegriff dieses Anspruchs.

Bei Sensorsystemen mit FMCW-Radar, insbesondere Mikrowellenradarsystemen besteht die Möglichkeit einer simultanen Abstands- und Geschwindigkeitsmessung. Derartige Sensorsysteme besitzen vielfältige Anwendungsmöglichkeiten z. B. in der Automobil- oder Automatisierungstechnik. Bei einem derartigen Sensor ist eine frequenzmodulierbare Signalquelle (z. B. ein Mikrowellenoszillator) vorhanden, der über eine Sende- und Empfangseinheit (z. B. eine oder mehrere Antennen) ein z. B. linear frequenzmoduliertes Sendesignal abstrahlt. Das um die Laufzeit bis zu einem Meßobjekt und zurück verzögert empfangene Signal wird als Empfangssignal durch eine Sende-/Empfangsweiche vom Sendesignal getrennt und einem Mischer zugeleitet. In diesem Mischer wird das Empfangssignal mit dem Sendesignal demoduliert. Vorzugsweise erfolgt anschließend eine Tiefpaßfilterung zur Eliminierung unerwünschter Frequenzanteile. Die Information über den Abstand zwischen der Sende- und Empfangseinheit und dem Meßobjekt ist bei einem derartigen Sensor proportional dem Phasenhub (bzw. der Frequenz) des Meßsignales. Wegen dieses Umstandes wirken in der Praxis vor allem Fehler der Phase des Signales begrenzend auf die Leistungsfähigkeit (Reichweite, Meßgenauigkeit, Empfindlichkeit) des Systems. Als solche Phasenfehler können z. B. stochastisch verteilte Fehler auftreten, die ihre Ursache in einem Phasenrauschen der Signalquelle haben. Derartige Fehler wirken sich insbesondere bei großen Meßabständen nachteilig aus. Systematische Phasenfehler werden beispielsweise durch eine nicht ideal linear verlaufende Frequenzmodulation der Signalquelle hervorgerufen. Fehler dieser Art stören häufig schon bei Nahbereichsmessung erheblich.

Um derartige Phasenfehler bei den beschriebenen Sensoren zu unterdrücken, ist ein erheblicher technischer Aufwand erforderlich. In der DE 27 10 841 A1 ist eine Anordnung zur Abstandsmessung beschrieben, bei der ein linear frequenzmodulierter Oszillator verwendet wird und Vorrichtungen vorgesehen sind, die unter Verwendung einer Verzögerungsleitung und einer Regelschleife Abweichungen von der Linearität der Modulation korrigieren.

Aufgabe der vorliegenden Erfindung ist es, ein Sensorsystem zur Abstands- oder Geschwindigkeitsmessung mittels eines frequenzmodulierten Signals anzugeben, das mit vergleichsweise geringem Aufwand herstellbar ist und das eine gegenüber Sensorsystemen mit Phasenfehlern verbesserte Meßgenauigkeit aufweist.

Diese Aufgabe wird mit dem Sensorsystem mit den Merkmalen des Anspruches 1 gelöst. Weitere Ausgestaltungen ergeben sich aus den abhängigen Ansprüchen.

Bei dem erfindungsgemäßen Sensorsystem wird durch Verwendung einer internen Verzögerungseinrichtung ein mit dem Meßsignal vergleichbares Bezugssignal erzeugt. Zu allen Zeitpunkten, an denen dieses Bezugssignal eine definierte Phase, z. B. einen Nulldurchgang, aufweist, wird das Meßsignal vorzugsweise in digitalisierter Form abgespeichert. Diese Werte des Meßsignales können dann ausgewertet werden unabhängig von den fehlerhaften Schwankungen der Phase, die von der Signalquelle oder anderen Komponenten der Vorrichtung hervorgerufen werden. Das ausgewertete Meßergebnis entspricht daher einer Messung mit z. B. ideal linear frequenzmoduliertem Signalmedium. Zusätzlich zu dieser verbesserten Auswertung kann das Bezugssignal verwendet werden, um eine kontinuierliche Korrektur des von der Signalquelle erzeugten Signals vorzunehmen. Die Steuerung dieser Korrekturvorrichtung erfolgt ebenfalls dadurch, daß die Zeitpunkte, an denen das Bezugssignal eine definierte Phase aufweist, bestimmt werden und aus den zugehörigen Phasen des Meßsignales ein jeweiliger Korrekturwert rechnerisch ermittelt und anschließend zum Nachstimmen der Signalquelle verwendet wird.

Es folgt eine Erläuterung des erfindungsgemäßen Sensorsystems anhand der Figuren 1 bis 4.

Figur 1     zeigt ein Blockschaltbild eines Ausführungsbeispiels der gesamten Vorrichtung.

Figur 2     zeigt ein Blockschaltbild für eine Schaltung zur Bestimmung von Nulldurchgängen des Bezugssignals.

Figur 3     zeigt ein Blockschaltbild für eine Detektoreinrichtung zur Bestimmung der Zeitpunkte definierter Phase des Bezugssignales.

Figur 4     zeigt ein Blockschaltbild für eine Anordnung zur Korrektur des von der Signalquelle erzeugten frequenzmodulierten Signalmediums.

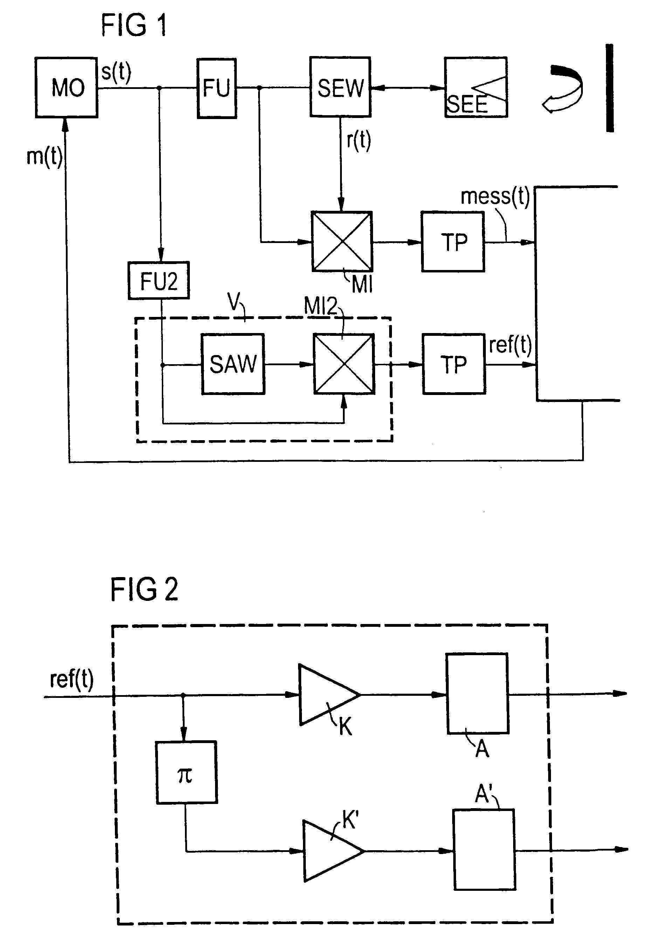

In Figur 1 ist die Signalquelle MO eingezeichnet, die ein Signal liefert, das sich wellenförmig ausbreitet und frequenzmoduliert ist. Die Signalquelle ist z. B. ein Mikrowellenoszillator, eine Lichtquelle oder ein Ultraschallgenerator. Im folgenden wird als Beispiel die Ausführung als Mikrowellen-Dopplerradar beschrieben. Die Signalquelle verfügt in diesem Fall über einen Frequenzmodulator, mit dem eine Frequenzmodulation, vorzugsweise eine lineare Modulation, des Mikrowellen-Signals erzeugt werden kann. Das Sendesignal s(t) wird einer Sende- und Empfangsweiche SEW zugeführt, die z. B. ein Zirkulator oder ein Richtkoppler sein kann. Von dieser Weiche gelangt das Sendesignal in die Sende- und Empfangseinheit SEE, die über eine oder mehrere Antennen zum Abstrahlen und zum Empfangen des Mikrowellensignales verfügt. Nachdem das Sendesignal abgestrahlt und von einem Meßobjekt reflektiert worden ist, wird es von der Sende- und Empfangseinrichtung als Empfangssignal r(t) über die Sende- und Empfangsweiche einer Mischeinrichtung MI zugeführt, in der das Empfangssignal mit dem Sendesignal s(t) zu dem Meßsignal mess(t) gemischt und vorzugsweise in einem Tiefpaßfilter TP von störenden hochfrequenten Mischanteilen gereinigt wird.

Bei dem erfindungsgemäßen Sensorsystem wird über eine Verzögerungseinrichtung V ein Bezugssignal ref (t) erzeugt. Diese Verzögerungseinrichtung verzögert das von der Signalquelle MO kommende Sendesignal s(t) z. B. unter Verwendung eines Oberflächenwellenbauelementes SAW. Das verzögerte Signal wird in einer weiteren Mischeinrichtung MI2 mit dem Sendesignal s(t) zu dem Bezugssignal gemischt und vorzugsweise durch ein Tiefpaßfilter geleitet. Im Fall eines Mikrowellenradars wird vorzugsweise ein Oberflächenwellenbauelement zur zeitlichen Verzögerung des Signales verwendet. Bei anderen Ausgestaltungen des erfindungsgemäßen Sensorsystemes kann eine entsprechende alternative Verzögerungseinrichtung vorgesehen sein. Das Meßsignal und das Bezugssignal werden einer weiteren Einrichtung zugeführt, in der der Wert des Meßsignales zu den Zeitpunkten definierter Phase des Bezugssignales erfaßt, ggf. digitalisiert und ausgewertet wird.

In Figur 1 sind ergänzend Frequenzumsetzer FU und FU2 eingezeichnet, die weggelassen sein können. Die Frequenzumsetzer FU und FU2 können als Frequenzteiler, Frequenzvervielfacher oder als Mischer mit Lokaloszillator ausgeführt werden. Der Frequenzumsetzer FU dient dazu, das VCO-Signal s(t) auf die gewünschte Meßfrequenz und Bandbreite umzusetzen, die das abgestrahlte Signal aufweisen soll. Der Frequenzumsetzer FU2, dient dazu, das VCO-Signal s(t) auf eine Frequenz und Bandbreite umzusetzen, die sich vorteilhaft über die Verzögerungseinrichtung V übertragen läßt. Falls durch den Frequenzumsetzer FU nennenswerte Phasenfehler verursacht werden, ist es vorteilhaft, das Signal erst hinter dem Frequenzumsetzer FU zur Verzögerungseinrichtung (bzw. zum Frequenzumsetzer FU2) zu leiten. So können auch diese Fehler mit der erfindungsgemäßen Phasenfehler-Korrektur behoben werden.

Bei einer direkten Auswertung des Meßsignales, ohne daß eine Korrektur des Sendesignales vorgenommen wird, wird eine Verzerrung des Phasenverlaufes des Sendesignales dadurch nachträglich kompensiert (Nachentzerrung), daß das Meßsignal zu Zeitpunkten definierter Phase des Bezugssignales erfaßt wird und daher eine Auswertung erfolgen kann, die der Verwendung eines Sendesignales mit idealem Phasenverlauf entspricht. Eine besonders vorteilhafte schaltungstechnische Realisierung erfaßt die Nulldurchgänge des Bezugssignales. Wird dafür ein Dualkomparator gemäß Figur 2 verwendet, können Nulldurchgänge, bei denen das Vorzeichen der elektrischen Spannung des Bezugssignales vom positiven in den negativen Bereich oder umgekehrt wechselt, gleichermaßen erfaßt werden. Bei dieser Schaltungsanordnung wird das Bezugssignal einerseits einem Komparator K und andererseits über einen Phasenschieber π, der die Phase des Signales um 180° verschiebt, einem zweiten Komparator K' zugeführt. Anschließend kann ggf. eine Anpassung A der Spannungspegel und eine Angleichung der Schaltungszweige zur Verbesserung der Symmetrie bei hohen Ansprüchen an die Meßgenauigkeit erfolgen. Um eine hohe Schaltungssymmetrie zu gewährleisten, ist es günstig, einen Dualkomparator mit zwei monolithisch auf einen Chip integrierten Komparatoren einzusetzen. Das garantiert thermische Kopplung und geringe Toleranzen der Einzelbauelemente. Die beiden getrennten Signale werden vor ihrer Zusammenführung zum Zweck einer Impulsformung integrierten monostabilen Kippstufen (Monoflops) zugeführt. Alternativ kann eine relativ einfachere Differenzierschaltung verwendet werden.

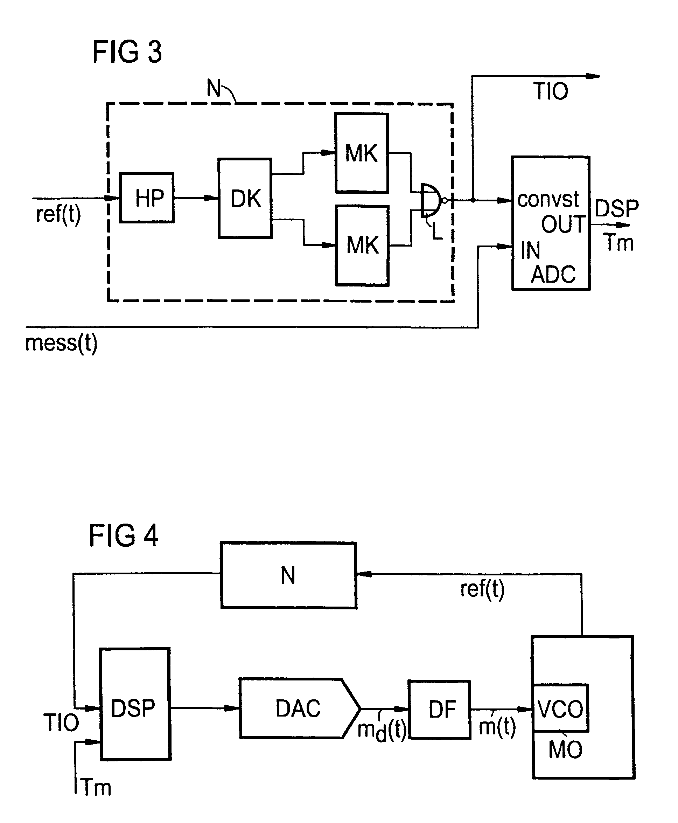

Figur 3 zeigt die Detektoreinrichtung, die für die Bestimmung bestimmter Phasen des Bezugssignales, hier insbesondere der Nulldurchgänge, vorgesehen ist. Das Bezugssignal wird zunächst einem Hochpaßfilter HP zugeführt, um mögliche Gleichspannungsanteile oder niederfrequente Störsignale zu unterdrücken. Es schließen sich der Dualkomparator DK gemäß Figur 2 und die monostabilen Kippstufen MK sowie ein OR-Logikgatter L an. Das sich daraus ergebende Ausgangssignal dieser Detektoreinrichtung N dient dann dazu, die Zeitpunkte oder Zeitabstände der bestimmten Phasen z. B. mittels einer Taktzähleinrichtung, die von dem Ausgangssignal der Detektoreinrichtung gesteuert wird, zu erfassen und einer Auswertung zuzuführen. Das Ausgangssignal der Detektoreinrichtung kann z. B. verwendet werden als Auslösesignal (Triggersignal) zur Steuerung eines Analog-Digital-Wandlers ADC. An einen Eingang dieses Analog-Digital-Wandlers ist das Meßsignal mess(t) angelegt und wird im Takt des von der Detektoreinrichtung N gelieferten Ausgangssignales in digitale Signale umgewandelt. Das Meßsignal wird daher zu den Zeitpunkten gleicher Phase des Bezugssignales abgetastet. Die so erhaltenen diskreten Abtastwerte des Meßsignales werden äquidistant angeordnet in einen Speicher eines nachgeschalteten Auswerterechners eingelesen und können dort zur Bestimmung des Abstandes oder der Geschwindigkeit des Meßobjektes rechnerisch weiterverarbeitet werden.

Mit der Anordnung gemäß Figur 1 läßt sich auch ein Steuersignal m(t) erzeugen, das eine Korrektur des von der Signalquelle erzeugten Sendesignales gestattet (Vorentzerrung). Das Bezugssignal entsteht entsprechend Figur 1 durch Mischen des Sendesignales s(t) mit dem durch die Verzögerungsleitung (Oberflächenwellenbauelement SAW) um eine bestimmte Verzögerungszeit verzögerten Signal. Bei einem idealen Mikrowellen-Signal ohne Phasenfehler ist das resultierende Bezugssignal monofrequent, wobei die Frequenz proportional dieser Verzögerungszeit ist. Diese Frequenz läßt sich aus den Zeitabständen der Nulldurchgänge bestimmen. Zu diesem Zweck wird entsprechend Figur 4 das Ausgangssignal der Detektoreinrichtung N an einen für derartige Anwendungszwecke vorgesehenen Timereingang TIO eines Digitalsignalprozessors DSP geführt. Bei jedem Auslöseimpuls eines von der Detektoreinrichtung festgestellten Nulldurchganges des Bezugssignales wird die Auslöseeinrichtung des Digitalsignalprozessors betätigt. Über diese Auslöseimpulse (Trigger) wird eine Taktzähleinrichtung des Digitalsignalprozessors ein- und ausgeschaltet, so daß über die Anzahl der zwischen zwei Auslöseimpulsen gezählten Zeittakte der Zeitabstand zwischen zwei Auslösesignalen bestimmt werden kann. Bei einer linearen Frequenzmodulation des Sendesignales ist der Zeitabstand $T_{zero}$ zwischen zwei Nulldurchgängen des Bezugssignales konstant und die Steigung der Zeit-Frequenz-Kurve umgekehrt proportional zu $T_{zero}$. Die Linearisierung der Frequenzmodulation läßt sich daher dadurch sicherstellen, daß die Signalquelle so nachgestimmt wird, daß diese Zeitabstände zwischen zwei Nulldurchgängen des Bezugssignales konstant bleiben.

Falls die gemessene Zeit zwischen zwei Nulldurchgängen des Bezugssignales größer (kleiner) ist als die erwartete (durch Sweep-Rate und Dimensionierung der Verzögerungsleitung festgelegte), so muß die Steigung der Zeit-Frequenz-Kurve und damit der Kennlinie der Modulation im nachfolgenden Sweep (Durchgang der Modulation von der niedrigsten zur höchsten Frequenz oder umgekehrt) vergrößert (verkleinert) werden. Zweckmäßig ist es, umso mehr zu korrigieren, je größer die Abweichung ist. Man erzeugt auf diese Weise nach und nach eine angepaßte Kennlinie der Modulation für den jeweils folgenden Sweep. Um eine erste Fehlerberechnung zu ermöglichen, wird vor dem Start einer vorgesehenen Iterationsprozedur ein lineares Modulationssignal (Dreiecksspannung) an den Oszillator angelegt. Dabei wird die erste Messung der Differenz zwischen Soll- und Istwerten der Abstände zwischen den Nulldurchgängen durchgeführt. Das Ergebnis wird als $\Delta T_{zero}^{(0)}(t)$ abgespeichert. Es wird nun das in digitalisierter Form gespeicherte Modulationssignal über eine Iterationsprozedur immer von neuem korrigiert. Das Steuersignal m(t) wird zunächst als Funktion diskreter Spannungswerte in Abhängigkeit von diskreten Zeitwerten vom Digital-Analog-Wandler ausgegeben.

In der üblichen Beschreibungsform hat die Steuerspannung als Funktion der Zeit folgende Form:

$m_d(t) = \Sigma_n m(nT_m) \cdot h_0(t-nT_m)$, wobei $h_0(t) = A_m$ für $0 \le t < T_m$ und sonst $h_0(t) = 0$ ist; $T_m$ ist eine separate, von der Analog-Digital-Abtastung unabhängige Zeitkonstante, $A_m$ ist eine Normierungskonstante, z. B. $A_m = 1$.

Die modifizierte $m_d^{(\mu+1)}(t)$ für den $(\mu+1)$-ten Iterationsschritt wird aus $m_d^{(\mu)}(t)$ des $\mu$-ten Iterationsschrittes und einem korrigierenden Summanden $k^{(\mu)}(t)$ gebildet. Es gilt dann:

$$m_d^{(\mu+1)}(t) = m_d^{(\mu)}(t) + k^{(\mu)}(t), \quad k^{(\mu)}(t) = const \cdot \Delta T_{zero}^{(\mu)}(t).$$

Die Konstante const kann innerhalb der Grenzen, in denen die Iteration durchführbar ist, für das vorgesehene Anwendungsbeispiel optimiert werden: Große Werte für diese Konstante verkürzen die zur Vorentzerrung benötigte Bearbeitungszeit, wirken sich jedoch durch große Änderungsschritte negativ aus, weil die Korrekturen möglicherweise nicht ausreichend gleichmäßig zu dem gewünschten Wert hin führen. Kleine Werte der Konstanten hingegen bewirken eine präzisere Linearisierung, verzögern jedoch den Vorgang erheblich. So muß hier ein dem spezifischen Anwendungsfall angepaßter Kompromiß eingegangen werden. Es ist vorteilhaft, die Wahl der Konstanten an die Größe der Abweichung von der Linearität der Modulation zu koppeln. Darüber hinaus sollte die Konstante so gewählt werden, daß sich stochastische Phasenfehler, die durch die Vorentzerrung nicht kompensiert werden können, ausgemittelt werden. Die systematischen Phasenfehler werden durch die Auswertung dann optimal korrigiert. Es ist auch möglich, das korrigierte Signal nicht adaptiv, sondern direkt aus den Zeitpunkten der definierten Phasen mindestens eines erfaßten Bezugssignales zu berechnen. Die Frequenz des Sendesignales ergibt sich aus den detektierten Zeitintervallen zwischen zwei definierten Phasen. Die Spannung ist bekannt, da das erfindungsgemäße System das Modulationssignal selbst berechnet und aussendet. Bei Vorhandensein von stochastischen Phasenfehlern sind vorzugsweise mehrere Bezugssignale auszuwerten, um so einen gemittelten (systematischen) Zusammenhang zwischen der Modulationsspannung und der Sendefrequenz zu bestimmen.

Das in Figur 4 eingezeichnete Desampling-Filter DF wirkt glättend, so daß aus $m_d(t)$ das kontinuierliche Steuersignal m(t) entsteht. Falls der Abstand der Nulldurchgänge des Bezugssignales zu groß ist, wird der Korrekturfaktor k(t) positiv, so daß das Steuersignal m(t) durch die Korrektur vergrößert wird. Das bewirkt eine Erhöhung der Frequenz des Bezugsignales, so daß im nächsten Iterationsschritt der zeitliche Abstand zweier Nulldurchgänge kleiner wird. Die Iterationsprozedur wird so oft durchlaufen, bis alle Abweichungen der Zeitabstände zweier Nulldurchgänge des Bezugssignales von der gewünschten Zeitspanne dem Betrag nach unterhalb einer vorgegebenen Schranke liegen. Diese Schranke wird durch die Wahl der Bearbeitungszeit und Meßgenauigkeit bestimmt.

Die erforderliche Rechenzeit läßt sich weiter reduzieren, wenn man den Algorithmus zur Linearisierung nur auf eine Hälfte der für Dopplermessungen symmetrischen Modulationskurve anwendet. Nachdem die geforderte Genauigkeit erreicht ist, wird der vorentzerrte Kurvenast für den Upsweep (Durchstimmung der Frequenz in ansteigender Richtung) vertikal gespiegelt in den folgenden Speicherbereich abgespeichert. Die nun abgeschlossene Vorentzerrung schaltet schließlich die folgende Signalauswertung frei; weitere unnötige Linearisierungszyklen werden unterdrückt. So wird eine sequentielle Abarbeitung von Vorentzerrung und restlicher Signalverarbeitung erreicht, was mehrere Vorteile mit sich bringt. Vermeintlich falsche Messungen mit noch nicht gänzlich vorentzerrter Modulationskurve werden vermieden. Das Abschalten der Linearisierungsiteration gibt weitere Reserven für Rechenleistung frei. Bei Alterungs- oder Temperaturdrift kann die Linearisierung bei Bedarf (z. B. bei Detektion einer größeren Nichtlinearität wieder zugeschaltet werden.

**Patentansprüche**

1.  Sensorsystem mit

    - einer Signalquelle (MO) zur Erzeugung eines frequenzmodulierten Signals (s(t)),
    - einer Sende- und Empfangseinrichtung (SEW, SEE) zum Abstrahlen des Signals (s(t)) und Empfangen des nach seiner Abstrahlung reflektierten Signals (r(t)),
    - einer Mischeinrichtung (MI) zum Mischen des empfangenen Signals (r(t)) mit dem von der Signalquelle (MO) erzeugten Signal (s(t)) zu einem Meßsignal (mess(t)),
    - einem Nulldurchgangsdetektor (N) zum Detektieren der Nulldurchgänge eines Bezugssignals (ref(t)) und
    - Mitteln (ADC), die das Meßsignal (mess(t)) zu den Zeitpunkten der Nulldurchgänge des Bezugssignals (ref(t)) abtasten und die Abtastwerte weiterverarbeiten, **gekennzeichnet durch**
    - eine Verzögerungseinrichtung (V) mit einer nachgeordneten weiteren Mischeinrichtung (MI2), wobei die Verzögerungseinrichtung (V) das von der Signalquelle (MO) kommende Signal (s(t)) verzögert und die weitere Mischeinrichtung (MI2) das von der Verzögerungseinrichtung (V) kommende Signal mit dem von der Signalquelle (MO) erzeugten Signals (s(t)) mischt, um das Bezugssignal (ref(t)) zu erzeugen.

2.  Sensorsystem nach Anspruch 1, **dadurch gekennzeichnet, daß** der Nulldurchgangsdetektor (N) zwei Komparatoren (K, K') umfaßt, von denen der eine Komparator (K) mit dem Bezugssignal (ref(t)) und der andere Komparator (K') mit dem um 180° phasenverschobenen Bezugssignal (ref(t)) angesteuert wird, und daß die Ausgänge der Komparatoren (K, K') über monostabile Kippstufen (MK) einem OR-Logikgatter (L) zur Bildung des Ausgangssignals des Nulldurchgangsdetektors (N) zugeführt sind.

3.  Sensorsystem nach Anspruch 1 oder 2, **gekennzeichnet durch** einen Analog-Digital-Wandler (ADC), der von den detektierten Nulldurchgängen getaktet ist und im Takt der Nulldurchgänge das Meßsignal (mess(t)) in digitale Signale umwandelt.

**Claims**

1.  Sensor system comprising

    - a signal source (MO) for generating a frequency modulated signal (s(t)),
    - a transmitting and receiving device (SEW, SEE) for radiating the signal (s(t)) and receiving the signal (r(t)) reflected after it has been radiated,
    - a mixing device (MI) for mixing the received signal (r(t)) with the signal (s(t)) generated by the signal source (MO) to form a measurement signal (mess(t)),
    - a zero transition detector (N) for detecting the zero transitions of a reference signal (ref(t)) and
    - means (ADC) which sample the measurement signal (mess(t)) at the times of the zero transitions of the reference signal (ref(t)) and further process the samples,

    **characterized by**

    - a delay device (V) followed by a further mixing device (MI2), the delay device (V) delaying the signal (s(t)) coming from the signal source (MO) and the further mixing device (MI2) mixing the signal coming from the delay device (V) with the signal (s(t)) generated by the signal source (MO) in order to generate the reference signal (ref(t)).

2.  Sensor system according to Claim 1, **characterized in that** the zero transition detector (N) comprises two comparators (K, K'), one comparator (K) of which is driven with the reference signal (ref(t)) and the other comparator (K') of which is driven with the reference signal (ref(t)) phase-shifted by 180°, and that the outputs of the comparators (K, K') are supplied via monostable flip-flops (MK) to an OR logic gate (L) for forming the output signal of the zero transition detector (N).

3.  Sensor system according to Claim 1 or 2, **characterized by** an analogue/digital converter (ADC) which is clocked by the detected zero transitions and converts the measurement signal (mess(t)) into digital signals at the rate of the zero transitions.

**EP 0 963 561 B1**

**Revendications**

1. Système capteur (MO) comportant

   - une source de signal (MO) pour la production d'un signal modulé en fréquence (s (t)),
   - un dispositif d'émission et de réception (SEW, SEE) pour l'émission du signal (s (t)) et pour la réception du signal (r (t)) réfléchi après son émission,
   - un dispositif mélangeur (MI) pour le mélange du signal reçu (r (t)) avec le signal (s (t)) produit par la source de signal (MO) pour former un signal de mesure (mess (t)),
   - un détecteur de passage par zéro (N) pour la détection des passages par zéro d'un signal de référence (ref (t)), et
   - des moyens (ADC) qui échantillonnent le signal de mesure (mess (t)) aux instants des passages par zéro du signal de référence (ref (t)) et qui traitent les valeurs échantillonnées,

   **caractérisé par**

   - un dispositif temporisateur (V) avec un autre dispositif mélangeur (MI2) placé du côté aval, le dispositif temporisateur (V) retardant le signal (s (t)) issu de la source de signal (MO) et l'autre dispositif mélangeur (MI2) mélangeant le signal issu du dispositif temporisateur (V) avec le signal (s (t)) produit par la source de signal (MO) pour produire le signal de référence (ref (t)).

2. Système capteur selon la revendication 1, **caractérisé par le fait que** le détecteur de passage par zéro (N) comprend deux comparateurs (K, K') parmi lesquels un premier comparateur (K) est commandé avec le signal de référence (ref (t)) et un deuxième comparateur (K') avec le signal de référence (ref (t)) déphasé de 180° et que les sorties des comparateurs (K, K') sont envoyées par l'intermédiaire de bascules monostables (MK) à une porte logique OU (L) pour la formation du signal de sortie du détecteur de passage par zéro (N).

3. Système capteur selon la revendication 1 ou 2, **caractérisé par** un convertisseur analogique-numérique (ADC) qui est soumis à la cadence des passages par zéro détectés et qui, avec la cadence des passages par zéro, transforme le signal de mesure (mess (t)) en signaux numériques.

## FIG 1

## FIG 2

## FIG 3

## FIG 4